# EUROPÄISCHE PATENTSCHRIFT

(11) **EP 1 833 133 B1**
(45) Veröffentlichungstag und Bekanntmachung des Hinweises auf die Patenterteilung: **10.04.2013**
(21) Anmeldenummer: 07101929.3
(22) Anmeldetag: 07.02.2007
(51) Int. Cl.: H02G 3/32

(54) **Montagevorrichtung für einen Kabelkanal und Kabelkanal**
Mounting device for a cable duct and cable duct
Dispositif de montage pour un caniveau de câbles et caniveau de câbles

(30) Priorität: 09.02.2006 CH 2102006
(43) Veröffentlichungstag der Anmeldung: 12.09.2007
(73) Patentinhaber: Zurecon AG, 8003 Zürich (CH)
(72) Erfinder: Pfluger, Gerd, 4625 Oberbuchsiten (CH)
(74) Vertreter: Rutz, Peter

(56) Entgegenhaltungen:
- EP-A- 0 746 074
- EP-A- 1 168 555
- DE-A1- 2 431 834
- DE-A1- 10 101 085
- GB-A- 2 117 026
- GB-A- 2 137 305
- GB-A- 2 287 727

## Beschreibung

Die Erfindung betrifft eine Vorrichtung zur Montage eines Kabelkanals, der insbesondere an der Decke eines Gebäudes montierbar ist sowie einen mit dieser Montagevorrichtung installierten Kabelkanal, nach dem Oberbegriff des Patentanspruchs 1 bzw. 13.

In Gewerbe- Industrie- und Verwaltungsgebäuden werden Kabel, insbesondere Kabel für Stark- und Schwachstromnetze, infolge fehlender Eigenstabilität in Kabelkanälen geführt, beispielsweise von einem Schaltfeld einer Zentrale zu den Verbrauchern. Kabelkanäle dieser Art sind beispielsweise aus [1], EP 1 505 705 A1 bekannt.

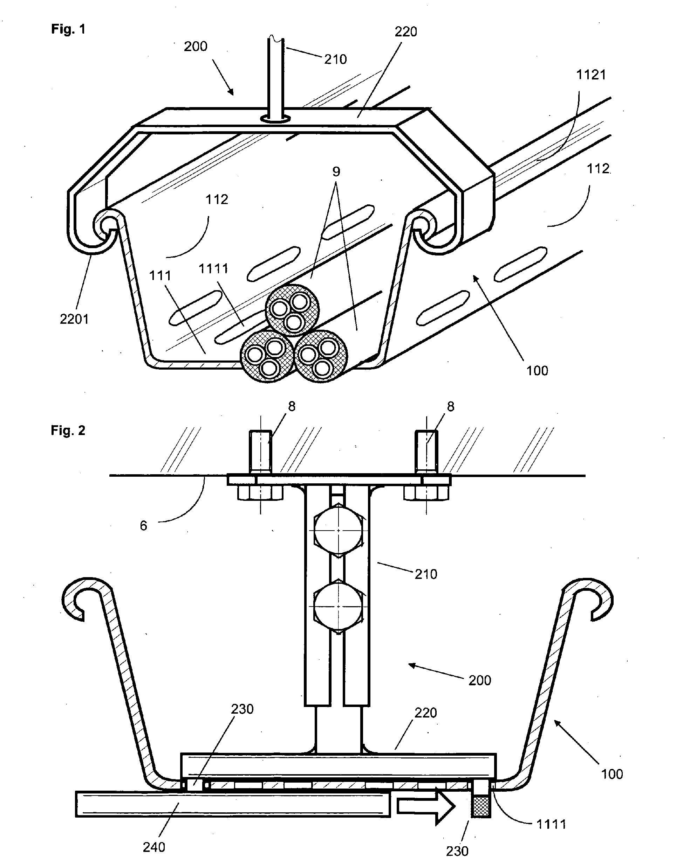

Figur 1 zeigt einen bekannten mit schlitzartigen Öffnungen 1111 versehenen Kabelkanal 100, welcher zwei durch ein Bodenteil 111 miteinander verbundene Seitenwände 112 mit nach aussen gedrehten Endstücken 1121 aufweist. Der Kabelkanal 100 ist von einer Montagevorrichtung 200 gehalten, die einen mittels eines Halteteils 210 mit der Decke verbundenen Bügel 220 aufweist, der beidseitig mit Haken 2201 versehen ist, die in die Endstücke 1121 des Kabelkanals 100 eingreifen. Die in Figur 1 gezeigte Lösung weist verschiedene Nachteile auf. Einerseits resultiert eine relativ aufwendige Montage der Vorrichtung 200, des Kabelkanals 100 und der zu installierenden Kabel 9. Das Verbinden des Bügels 220 mit dem Kabelkanal 100 erfordert eine Krafteinwirkung, durch die die Seitenwände 112 soweit gegeneinander gepresst werden, bis die Haken 2201 in die Endstücke 1121 einführbar sind. Angesichts dessen, dass der Kabelkanal 100 an der Decke zu montieren ist und der Handwerker normalerweise sich auf einer Leiter befindet, ist diese Montageart umständlich. Deutlich erschwert wird die Montage, wenn in den Kabelkanal 100 bereits Kabel 9 eingelegt sind, die oft ein erhebliches Gewicht aufweisen.

Sofern das Kabel 9 erst nach der Montage des Kabelkanals 100 installiert wird, muss es hingegen umständlich eingeschlauft werden. Weiterhin benötigt die Vorrichtung von Figur 1 viel Platz und reicht unterhalb der Decke weit in den Raum des betreffenden Gebäudes hinein. Nicht zuletzt deshalb, insbesondere jedoch wegen der technisch bedingten Form genügt diese Vorrichtung in vielen Fällen auch den Anforderungen der Anwender an die Ästhetik nicht.

Die aus [1] bekannte Montagevorrichtung 200 von Figur 2 weist ein an einer Decke montierbares ein- oder mehrteiliges Halteteil 210 auf, welches zum Halten eines Kabelkanals 100 dient, wie er beispielsweise in Figur 1 gezeigt ist. Das Halteteil 210 ist an dem dem Kabelkanal 100 zugewandten Ende mit einem Ausleger 220 fest verbunden, der wenigstens zwei Fangelemente 230 aufweist, die je durch eine der im Kabelkanal 100 vorgesehenen Öffnungen 1111 hindurch führbar und auf der anderen Seite schraubenlos mit einer Fangvorrichtung 240 verbindbar sind, so dass der Kabelkanal 100, normalerweise dessen Bodenteil 111, zwischen Ausleger 220 und Fangvorrichtung 240 fest gehalten ist. Mittels dieser Vorrichtung werden wesentliche Nachteile der Vorrichtung von Figur 1 vermieden.

Nachdem das Halteteil 210 an der Decke befestigt, vorzugsweise verschraubt wurde, kann der Kabelkanal 100 gegen das Halteteil 210 angehoben werden, bis er, nach dem Durchtreten der Fangelemente 230 durch die Öffnungen 1111 im Kabelkanal 100, an den Ausleger 220 anstösst, und die Fangvorrichtung 240 mit den Fangelementen 230 verbunden werden kann.

Das Verbinden der Fangvorrichtung 240 mit den Fangelementen 230 erfolgt in einfacher Weise rasch mit einem Handgriff und ohne die Verwendung von Schrauben und weiteren Verbindungsmitteln. Kabel 9 können nach der Montage der Vorrichtung in einfacher Weise in den Kabelkanal 100 eingelegt und wieder entnommen werden.

Bei dieser verbesserten Vorrichtung ist zu beachten, dass bei der Montage noch immer mehrere Handgriffe notwendig sind, was einen entsprechenden Zeitaufwand verursachen und unbequem sein kann. Ferner kann auch diese Vorrichtung den Anforderungen der Anwender an die Ästhetik nicht voll genügen.

Bei den Vorrichtungen von Figur 1 und Figur 2 muss der Kabelkanal bereits fertig montiert sein, bevor Kabel installiert werden können. Der Kabelkanal behindert daher grundsätzlich die Installation der Kabel, d.h. das Kabel muss um den Kabelkanal herum geführt und in diesen eingelegt werden.

Zu beachten ist weiter, dass bei den Vorrichtungen von Figur 1 und Figur 2 nur eine Deckenmontage möglich ist, beispielsweise jedoch nicht eine Wandmontage.

Verschiedene weitere aus dem Stand der Technik bekannte Vorrichtungen sind hingegen ausschliesslich für die Wandmontage vorgesehen. In [2], EP 0 746 074 A1 und [3], DE 24 31 834 A1 sind Kabelführungsvorrichtungen für an Wandflächen zu verlegende Kabel beschrieben. Diese Kabelführungsvorrichtungen bestehen aus in Abständen anzuordnenden bügelförmigen Kabelklemmen. Die Kabelklemmen der bekannten Leitungsführungen dieser Art sind aus einem im wesentlichen starren Werkstoff hergestellt, wobei die abgewinkelten Schenkelenden zwischen sich einen Schlitz frei lassen, dessen Breite grösser als der Kabeldurchmesser ist, so dass diese in vorteilhafter Weise von vorne in die Kabelklemmen eingeschoben werden können, ohne von der Seite her durch diese eingefädelt und durchgezogen werden zu müssen. Der breite Schlitz hat jedoch den Nachteil, dass die eingeführten Kabel leicht aus den Klemmen herausfallen, was nicht nur für die Montage der Vorrichtung an der Decke gilt. Deswegen sind, wie in [3] beschrieben, bei den bekannten Kabelführungsvorrichtungen Platten, Knebel oder dgl. Schlösser zum Verschliessen der Schlitze nach dem Einführen eines Kabels vorgesehen. Dadurch wird jedoch die Verlegungsarbeit wesentlich erschwert, zumal für jedes neu einzuführende Kabel die Schlitze geöffnet und wieder verschlossen werden müssen. Neben anderen Punkten ist hierin ein Hauptnachteil der bekannten Leitungsführungen zu sehen, zumal die Notwendigkeit von besonderen Verschlussteilen für die Kabelklemmenschlitze nicht nur die Verlegungsarbeit erschwert sondern auch zu einem zusätzlichen Herstellungs- und Lageraufwand führt.

Zur Vermeidung dieses Nachteils, insbesondere zur Vermeidung von Verschlusselementen, wie sie in [4], EP 1 168 555 A1 gezeigt sind, begrenzen in [3] die abgewinkelten Enden benachbarter Schenkel der Kabelklemmen einen engen, unter den üblichen Kabeldurchmessern liegenden Einführungsschlitz. Ferner sind die Schenkel der Kabelklemmen elastisch federnd auslenkbar, so dass leichtere Kabel zwischen die Schenkel eingepresst und dort gehalten werden. Für schwerere Kabel, die durch die elastischen Schenkel nicht gehalten werden können, ist diese Vorrichtung insbesondere für die Deckenmontage, bei der die Kabellast fast vollständig auf den elastischen Schenkeln liegt, jedoch nicht geeignet.

DE 101 01 085 A1 betrifft ein Kabelkanalsystem für technische Möbel, in denen Kabel für elektrische Geräte in einer möglichst geordneten und übersichtlichen Weise geführt und gehalten werden. [6], GB 2 137 305 A offenbart ein System für die Retrofit-Installation von Kabeln. Zum Halten der Kabel sind bekannte Clips oder Klammern vorgesehen, mittels derer leichte Kabel, beispielsweise Fernsehkabel gehalten werden können. Die Vorrichtungen von [5] und [6] sind zur Führung von schwereren Kabeln, insbesondere Starkstromkabeln hingegen nicht vorgesehen und auch nicht geeignet.

GB 2 287 727 A offenbart eine an einer Wand oder an der Decke montierbare Vorrichtung zum Halten von dekorativen Abdeckungen. [8], GB 2 117 026 A betrifft ein Verfahren zur Unterdachmontage einer aufwendig gestalteten Vorrichtung. Die Vorrichtungen von [7] und [8] sind zur Führung von schwereren Kabeln, insbesondere Starkstromkabeln daher ebenfalls weder vorgesehen und noch geeignet.

Der vorliegenden Erfindung liegt daher die Aufgabe zugrunde, eine weiter verbesserte Montagevorrichtung für einen Kabelkanal zu schaffen sowie einen mit diesen Montagevorrichtungen installierten Kabelkanal zu schaffen, bei denen die Nachteile der beschriebenen Vorrichtungen vermieden werden.

Insbesondere ist eine fabrikatorisch einfache und kostengünstige Montagevorrichtung zu schaffen, die rasch und sicher an allen Gebäudeteilen, also nicht nur an Decken, montierbar ist und die ebenfalls in einfacher Weise, vorzugsweise schraubenlos mit einem Kabelkanal verbunden werden kann. Bei Verwendung der erfindungsgemässen Montagevorrichtung sollen Kabel zudem rasch und flexibel installiert und deinstalliert werden können.

Bezüglich der Ästhetik sollen die Montagevorrichtung und insbesondere der Kabelkanal weniger Platz in Anspruch nehmen und einen vorteilhaften Eindruck hinterlassen.

Diese Aufgabe wird mit einer Montagevorrichtung und einem Kabelkanal gelöst, welche die in Anspruch 1 bzw. 13 angegebenen Merkmale aufweisen. Vorteilhafte Ausgestaltungen der Erfindung sind in weiteren Ansprüchen angegeben.

Die Vorrichtung, die der Montage eines zur Installation von Kabel vorgesehenen Kabelkanals dient, weist ein ein- oder mehrteiliges Halteteil auf, das an einem Gebäudeteil, beispielsweise an der Decke, einer Wand, einer Säule, einem Balken, einem statischen Träger, etc. eines Gebäudes montierbar ist.

Erfindungsgemäss ist das ein- oder mehrkammerige Halteteil ring- oder hülsenförmig ausgestaltet und zum zumindest teilweisen Umschliessen von Kabel geeignet. Diese können durch wenigstens eine Schlitzöffnung eingelegt oder axial in das Halteteil eingeführt werden. Das Halteteil ist zudem in den Kabelkanal derart einsenkbar, dass der Kabelkanal das Halteteil zumindest teilweise umschliesst oder umklammert, so dass eine vorzugsweise lösbare Verbindung resultiert. Die Achse y der Schlitzöffnung ist gegenüber der Längsachse des Kabelkanals um den Winkel a derart geneigt, dass in das Halteteil eingeführte und entlang der Achse ausgerichtete Kabel durch das Halteteil fest gehalten sind. Aufgrund der Ausrichtung der zu installierenden Kabel werden diese für die Einführung in die Schlitzöffnung gedreht und relaxieren anschliessend wieder entlang der Installationsachse x.

Durch diese Lösung resultieren zahlreiche Vorteile. So dient die Montagevorrichtung selbst dem Halten der Kabel, weshalb deren Installation bereits nach der Befestigung der Montagevorrichtungen provisorisch erfolgen kann. Die Kabel können mit geringem Aufwand eingefügt und wieder entnommen werden, wobei sie sofort stabil gehalten werden. Die Montagevorrichtung dient somit, im Gegensatz zu den bekannten Lösungen, bereits der Installation der Kabel, die nach der Montage des Kabelkanals in diesen bloss noch eingebettet werden. Da das Kabel bereits durch die Montagevorrichtungen gehalten wird, resultiert eine geringe Belastung des Kabelkanals selbst, so dass dieser beispielsweise flexibel oder stabil in Kurvenformen ausgestaltet sein kann. Da das Halteteil vorzugsweise vollständig in den Kabelkanal einsenkbar ist, resultiert ferner ein minimaler Platzbedarf. Der montierte Kabelkanal tritt daher nicht störend in Erscheinung, sondern kann als ästhetisch vorteilhaftes Gestaltungselement verwendet werden. Beispielsweise kann ein eingefärbter Kabelkanal verwendet werden, der einer Schlangenlinie folgt und für den Betrachter nicht erahnen lässt, dass darin Kabel verlegt ist.

Der Kabelkanal kann aus ungelochtem oder gelochtem Blech, aus vernieteten Elementen, aus Drahtgitter, aus festem oder flexiblem Kunststoff, etc. beschaffen sein. Der Kabelkanal kann mit flexiblen Segmenten oder Gelenken versehen sein, da er im Gegensatz zu herkömmlichen Ausführungen nicht mehr immer das ganze Gewicht aufzunehmen braucht. Er kann auch mit Ausformungen, Rillen etc. versehen werden, die z.B. einen vorteilhaften optischen Eindruck erwecken. Konstruktiv ist die Länge der Kabelkanäle frei wählbar, denn ihre Tragkraft ist vom Abstand abhängig, in welchem bei der Montage Halteteile zu ihrer Befestigung angeordnet werden ("Stützabstand"). Die Breite der Kabelkanäle ist konstruktiv ebenfalls frei wählbar, nach Massgabe der Breite der Halteteile. Auch die Tiefe kann frei gewählt werden, wobei die Zugänglichkeit zum Kabelkanal z.B. für Nachinstallationen etc. umso besser ist, je geringer die Einsenkung des Halteteils in den Kabelkanal dimensioniert worden ist, d.h. je grösser der Zwischenraum zwischen Kabelkanaloberkante und z.B. Decke ist. Die Seitenwände können so ausgeformt und gelocht werden, damit an diese Apparate direkt angeschraubt werden können. - Der Form und Funktionalität der Kabelkanäle werden durch das erfindungsgemässe Halteteil keine Grenzen gesetzt.

Durch das vollständige Einsenken des Halteteils in den Kabelkanal resultiert ein vorteilhaftes Zusammenwirken von Halteteil und Kabelkanal. Das Halteteil wird vom Kabelkanal umfasst, wodurch eine stabile Verbindung resultiert. Das hülsenförmige Halteteil kann direkt an den Wänden des Kabelkanals anliegen, so dass dessen Querschnitt sich nur unwesentlich reduziert. D.h. der der Aufnahme von Kabel dienende Querschnitt des Halteteils ist fast so gross wie der Querschnitt des Kabelkanals.

Das Halteteil und der Kabelkanal sind vorzugsweise mittels eines oder mehrerer ersten und zweiten Kopplungselemente miteinander verbindbar, die formschlüssig ineinander eingreifen können. Beispielsweise werden Wandelemente des Halteteils und Wandelemente des Kabelkanals ineinander verschoben, so dass sie zumindest teilweise formschlüssig aneinander anliegen. Vorzugsweise sind die ersten und/oder die zweiten Kopplungselemente derart elastisch gehalten, dass das Halteteil unter Krafteinwirkung in den Kabelkanal einschiebbar bzw. der Kabelkanal über das Halteteil schiebbar ist, wodurch ein Schnappverschluss gebildet wird. Das Halteteil und der Kabelkanal und die Kopplungselemente sind dabei derart ausgestaltet, dass die Kraft zum Lösen des Schnappverschlusses grösser ist, als die nach Abschluss der Installation einwirkende Kraft der installierten Kabel.

Der Kabelkanal weist typischerweise zwei durch ein Bodenteil miteinander verbundene Seitenwände auf, an denen, vorzugsweise an den Endstücken derselben, die zweiten Kopplungselemente derart angeformt sind, dass sie formschlüssig mit den ersten Kopplungselementen des Halteteils verbindbar sind, die an den entsprechend ausgestalteten, beispielsweise gebogenen Seitenwänden der Montagevorrichtung vorgesehen sind.

Eine formschlüssige Verbindung ist deshalb zu bevorzugen, weil sie unabhängig von der auf dem Kabelkanal aufliegenden Kabelmenge jederzeit zuverlässig verbindet bzw. funktioniert.

Die Verbindung des Kabelkanals bzw. von dessen Seitenwände mit dem Halteteil kann auch scharnierartig ausgebildet werden. Dadurch kann der Kabelkanal z.B. zur Vornahme von nachträglichen Montagearbeiten seitig heruntergeklappt werden, und erlaubt so die Zugänglichkeit zu jedem einzelnen Kabel. Trotzdem bleiben die Kabelbahnen am Ort. Sowohl die kraftschlüssigen, wie auch die formschlüssigen und die scharnierartigen Verbindungen können zusätzlich gesichert werden, z.B. durch Spezialschrauben oder Plomben. Dadurch kann der Zugang von Unbefugten zu den Kabeln verhindert werden, oder bleibt zumindest nicht unentdeckt. Keine der herkömmlichen Konstruktionen ermöglicht diese Sicherheit bei gleichzeitig voller Zugänglichkeit.

Das hülsenförmige Halteteil kann einstückig ausgebildet und mit einer oder mehreren vorzugsweise schräg oder im Zickzack verlaufenden Schlitzöffnungen versehen sein, die es erlauben, Kabel von unten in das Halteteil einzuführen. Durch eine schräg verlaufende Schlitzöffnung kann beispielsweise unter Krafteinwirkung schräg ausgerichtetes Kabel eingeführt werden, das anschliessend durch die vorhandenen Zugkräfte automatisch gestreckt, d.h. axial ausgerichtet über der quer darunter verlaufenden Schlitzöffnung vom Halteteil gehalten wird.

In einer vorzugsweisen Ausgestaltung besteht das hülsenförmige Halteteil aus zwei mittels einer Montageplatte miteinander verbundenen vorzugsweise identisch ausgestalteten Haltebügeln, deren zur Bildung einer Schlitzöffnung voneinander beabstandete Endstücke frontseitig vorzugsweise entlang einer Achse verlaufen, die mit der Längsachse des Kabelkanals einen Winkel a vorzugsweise im Bereich 45° einschliesst. In Abhängigkeit von der Steifigkeit der zu installierenden Kabel kann der Winkel a entsprechen angepasst werden (z.B. +/- 15°).

Die Breite der Schlitzöffnung, durch die das Kabel eingelegt wird, wird dabei vorzugsweise entsprechend dem grössten Durchmesser der Kabel gewählt, so dass die Breite der Schlitzöffnung möglichst klein, aber immer gross genug ist.

Das Halteteil weist wenigstens eine Montageöffnung zur Durchführung eines Montageelements auf, mittels dessen das Halteteil beispielsweise mit der Wand oder der Decke verbindbar ist. Korrespondierend zu dieser Montageöffnung ist vorzugsweise eine Erweiterung der Schlitzöffnung vorgesehen, die es erlaubt, das Montageelement durch die Schlitzöffnung in die Montageöffnung einzuführen. Das Halteteil kann daher ungehindert montiert werden.

In den Kabelkanal können Hilfselemente eingefügt werden, die beispielsweise zwischen den Endstücken oder Endleisten des Kabelkanals eingespannt sind. Aus den vorzugsweise plattenförmigen Hilfselementen können Segmente partiell ausgeschnitten und gegen den Innenraum des Kabelkanals gebogen sein, um Kabel zu ordnen, zu halten oder voneinander zu trennen, was insbesondere von Vorteil ist, wenn der Kabelkanal an einer Wand montiert wird.

Solche Segmente können auch im Kabelkanal vorgestanzt angebracht werden, um bei Bedarf in der erforderlichen Richtung aufgestellt zu werden.

Die Kabelkanäle sind vorzugsweise stapelbar, so dass sie mit geringem Aufwand gelagert und transportiert werden können.

Nachfolgend wird die Erfindung anhand von Zeichnungen näher erläutert. Dabei zeigt:
- Figur 1: eine erste bekannte Montagevorrichtung 100;
- Figur 2: eine zweite bekannte Montagevorrichtung 100;
- Figur 3: eine erfindungsgemässe Montagevorrichtung 2 mit einem hülsenförmigen Halteteil 2, in das Kabel 9 eingeführt wurde, und ein entsprechend ausgestalteter Kabelkanal 1;
- Figur 3a: eine Detaildarstellung von Kopplungselementen 121, 221;
- Figur 4: das Halteteil 2 und den Kabelkanal 1 von Figur 3 nach der Montage;
- Figur 5: das Halteteil 2 und den Kabelkanal 1 von Figur 3 in einer weiteren Darstellung;
- Figur 6: das mit einem Gebäudeteil 6 verbundene Halteteil 2 von Figur 5, das zusätzlich mit einer quer zur Achse der Montagevorrichtung 2 verlaufenden Schlitzöffnung 230 versehen ist, in die entsprechend ausgerichtetes Kabel 9 eingeführt wird;
- Figur 7: eine erfindungsgemässe Montagevorrichtung 2 mit einem Halteteil 2, das zwei identische bügelartige Haltebügel 25 aufweist, die durch eine gegebenenfalls mit einer Deckenstütze 2100 verbundene Montageplatte 21 miteinander verbindbar sind;
- Figur 8: die Montagevorrichtung 2 von Figur 7 mit dem zusammengesetzten Halteteil 2, in das ein Kabel 9 eingeführt wurde;
- Figur 9: die Montagevorrichtung 2 von Figur 7 mit dem zusammengesetzten Halteteil 2, das in den Kabelkanal 1 eingesenkt wurde und von diesem gehalten wird;
- Figur 10: einen Kabelkanal 1 nach einer der Figuren 1 bis 9 mit einem dazu passenden Hilfselement 5;
- Figur 11: das mit dem für die Wandmontage ausgerichteten Kabelkanal 1 verbundene Hilfselement 5 von Figur 10;
- Figur 12: ein vorzugsweise ausgestaltetes Halteteil 2 mit einer selbstschliessenden Öffnung 230, die durch zwei einander überlappende Teile 231, 232 des unteren Wandelements 23 gebildet wird;
- Figur 13: ein vorzugsweise ausgestaltetes Halteteil 2, an dem ein dazu korrespondierender Kabelkanal 1 einseitig eingehängt ist, der nach der Installation der Kabel 9 hochgeklappt werden kann;
- Figur 13a: in einer Detaildarstellung vorzugsweise ausgestaltete Kopplungselemente 121, 221 für das Halteteil 2 und den Kabelkanal 1 von Figur 13;
- Fig. 14: ein vorzugsweise ausgestaltetes Halteteil 2 mit zwei Kammern A, B, die je eine Zutrittsöffnung 230A bzw. 230B aufweisen;
- Fig. 15: ein vorzugsweise ausgestaltete Halteteil 2 mit zwei Kammern A, B, die je eine Zutrittsöffnung 230A bzw. 230B aufweisen; und
- Fig. 16: das Halteteil 2 von Figur 5, das an wenigstens einer Seitenwand 22 mit Öffnungen 228 versehen ist, in die ein dem Lösen des Kabelkanals 1 dienendes Werkzeug 4 einführbar ist.

Figur 1 und Figur 2 zeigen die eingangs beschriebenen bekannten Montagevorrichtungen.

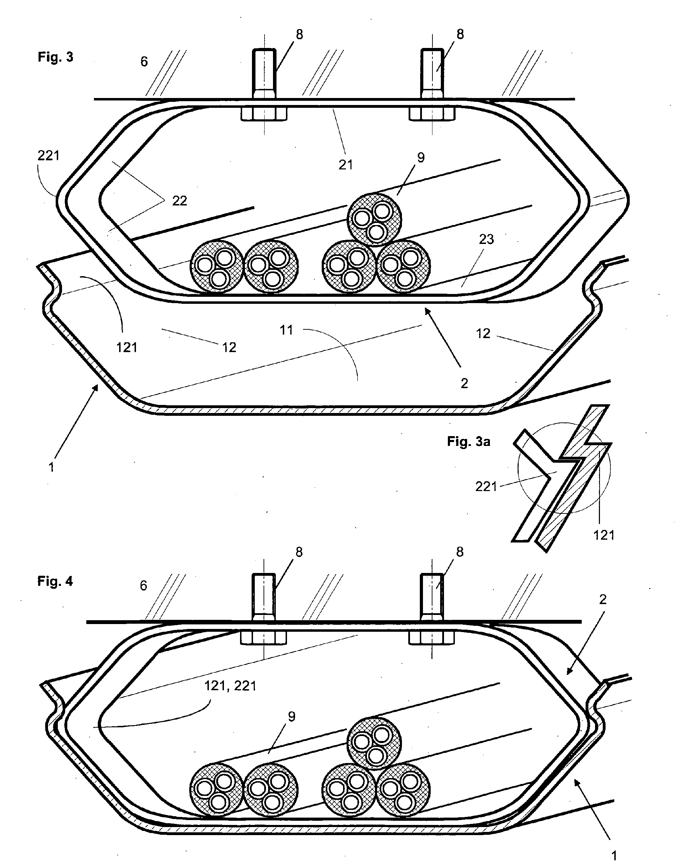

Figur 3 zeigt eine erfindungsgemässe Montagevorrichtung mit einem mittels Montageschrauben 8 mit der Decke 6 eines Gebäudes verbundenen Halteteil 2, in das in axialer Richtung Kabel 9 eingeschlauft wurde. Das Halteteil 2 ist in einer prinzipiellen Ausgestaltung gezeigt und weist ein oberes, mit der Decke 6 verbundenes Wandelement 21 und ein unteres Wandelement 23 auf, auf das das Kabel 9 abgelegt ist. Beide Wandelemente 21, 23, sind durch Seitenwände 22 miteinander verbunden, wodurch eine Hülse oder in sich geschlossene Schlaufe gebildet wird. Nach der Montage der erforderlichen Halteteile 2 kann das zu installierende Kabel 9 daher bereits verlegt werden, ohne dass der Kabelkanal 1 die Installationsarbeiten behindert. Der Kabelkanal 1, der dem weiteren Halten und optischen Abdeckung der installierten Kabel 9 dienen wird, ist noch nicht montiert.

Figur 4 zeigt die Montagevorrichtung 2 von Figur 3 nach der Montage des Kabelkanals 1. Das Halteteil 2 wurde dabei in den Kabelkanal 1 eingesenkt, der zwei durch ein Bodenteil 11 miteinander verbundene Seitenwände 12 aufweist, an denen Kopplungselemente 121 vorgesehen sind, die mit Kopplungselementen 221 zusammenwirken, die an den Seitenwänden 22 des Halteteils 2 vorgesehen sind. Nach der Montage wird das Halteteil 2 durch den annähernd U-Profil-förmigen Kabelkanal 1 teilweise umschlossen bzw. mit den am Aussenrand der Seitenwände 12 vorgesehenen Kopplungselemente 121 umklammert, so dass eine Verbindung resultiert, die nur unter Krafteinwirkung wieder lösbar ist.

Zur Montage des Kabelkanals 1 wird dieser gegen das Halteteil 2 gedrückt, wodurch die Seitenwände 12 des Kabelkanals 1 auseinander gedrückt werden, bis dessen Kopplungselemente 121 über die Kopplungselemente 221 des Halteelements 2 geführt sind und einrasten. Dadurch wird ein Schnappverschluss gebildet, der es erlaubt, den Kabelkanal 1 rasch zu montieren und wieder zu demontieren. Die Kraft, die erforderlich ist, um den Kabelkanal 1 zu montieren und wieder zu lösen, wird entsprechend dem Gewicht der zu installierenden Kabel 9 gewählt und wird durch die verwendeten Materialien, Materialdicken und die Form der Kopplungselemente 121, 221 bestimmt.

In Figur 3a sind Kopplungselemente 121, 221 gezeigt, die derart formschlüssig ineinander eingreifen, dass sie durch parallel zur Schwerkraft verlaufende Krafteinwirkungen der installierten Kabel 9 nicht voneinander lösbar sind. In diesem Fall sind die Seitenwände 12 des Kabelkanals 1 auseinander zu dehnen, damit dieser gelöst werden kann.

Nach der Montage des in Figur 4 gezeigten Kabelkanals 1 sind die Wandelemente 22, 23 des Halteteils 2 und die Wandelemente 11, 12 des Kabelkanals 1 derart ineinander verschoben, dass sie zumindest teilweise formschlüssig aneinander liegen.

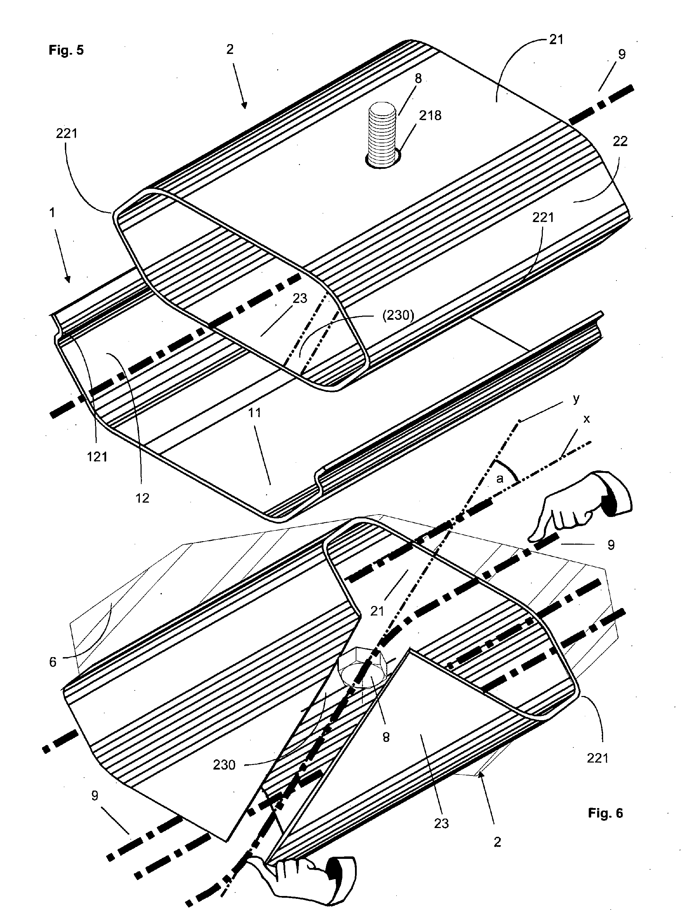

Figur 5 zeigt die Montagevorrichtung 2, in die ein Kabel 9 eingeführt wurde, und den Kabelkanal 1 von Figur 3 von oben gesehen.

Figur 6 zeigt das mit einem Gebäudeteil, z.B. der Decke 6 verbundene Halteteil 2 von Figur 5, das zusätzlich mit einer quer zur Achse der Montagevorrichtung 2 verlaufenden Schlitzöffnung 230 versehen ist, in die ein parallel zur Schlitzöffnung 230 ausgerichtetes Kabel 9 eingeführt wird. Weitere Kabel 9 wurden bereits eingelegt und axial ausgerichtet, so dass sie nicht mehr durch die Schlitzöffnung 230 hindurch treten können. Bei dieser Ausgestaltung des Halteteils 2 ist es daher nicht notwendig das Kabel 9 einzuschlaufen. Das Kabel 9 kann rasch und bequem durch die Schlitzöffnung 230 eingeführt werden und wird sofort gehalten, da das Kabel 9 durch die darauf einwirkenden Zugkräfte automatisch axial zum Halteteil 2 ausgerichtet wird.

Das Halteteil 2 von Figur 5 oder Figur 6 kann beispielsweise auch an einer Wand montiert werden, entlang der das Kabel 9 beispielsweise horizontal oder vertikal verlaufen soll. Die Ausgestaltung des Halteteils 2 von Figur 6 erlaubt auch hier wieder die bequemere und schnellere Installation des Kabels 9.

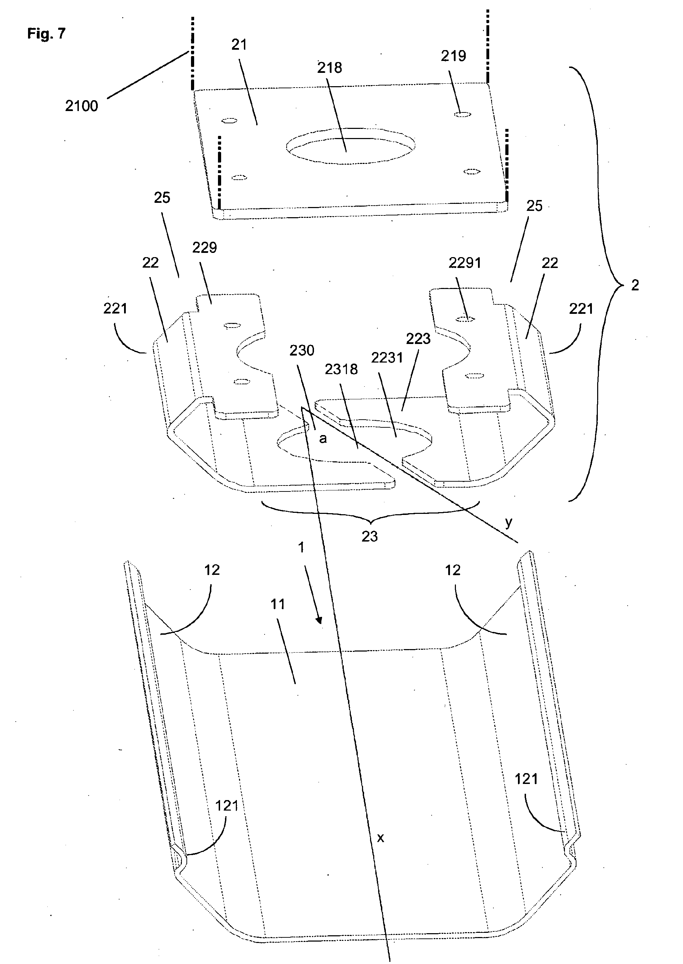

Figur 7 zeigt eine erfindungsgemässe Montagevorrichtung 2 mit einem Halteteil 2, das zwei identische Haltebügel 25 aufweist, die durch eine Montageplatte 21 miteinander verbindbar sind. Nach der Verbindung der beiden Haltebügel 25 mit der Montageplatte 21 resultiert prinzipiell ein Halteteil 2 in der Art wie es in Figur 6 gezeigt ist.

Jeder Haltebügel 25 umfasst ein Wandelement 22, an dem, senkrecht dazu, oben eine mit der Montageplatte 21 verbindbare Verbindungsplatte 229 und unten ein dem Tragen von Kabel 9 dienendes Flügelelement 223 vorgesehen ist. Die Verbindungsplatte 229 und die Montageplatte 21 weisen Öffnungen 2291 bzw. 219 auf, in die Verbindungselemente, wie Nieten oder Schrauben, einführbar sind.

Nach dem Verbinden der Haltebügel 25 mit der Montageplatte 21 sind die Flügelelemente 223 gegeneinander ausgerichtet und begrenzen mit ihren Frontseiten die schräg verlaufende Schlitzöffnung 230. Ferner weisen die Flügelelemente 223 Ausnehmungen 2231 auf, durch die in der Schlitzöffnung 230 eine kreisförmige Erweiterung 2318 gebildet wird, durch die Montagemittel hindurch führbar sind, um die Montageplatte 21, die eine Montageöffnung 218 aufweist, mit dem Gebäudeteil 6 zu verbinden. Das Halteteil 2 erlaubt daher nicht nur das einfache Einlegen von Kabel 9, sondern kann auch einfach an einem Gebäudeteil 6 befestigt werden. Die in der Montageplatte 21 vorgesehene Montageöffnung 218 weist einen relativ grossen Durchmesser auf, damit das mittels einer Montageschraube 8 und einer Unterlagsscheibe befestigte Halteteil 2 noch nach Wunsch ausgerichtet werden kann.

Aufgrund der Verwendung von zwei identischen Wandelementen 22, die mit minimalem Aufwand ausgestanzt, gebogen und mit der Montageplatte 21 verbunden werden können, resultiert eine ausserordentlich kostengünstige Fertigung des Halteteils 2.

In Figur 7 ist ferner gezeigt, dass das Halteteil 2 auch mittels eines Verbindungselements 2100 beispielsweise mittels einer Deckenstütze mit der Decke 6 verbindbar ist.

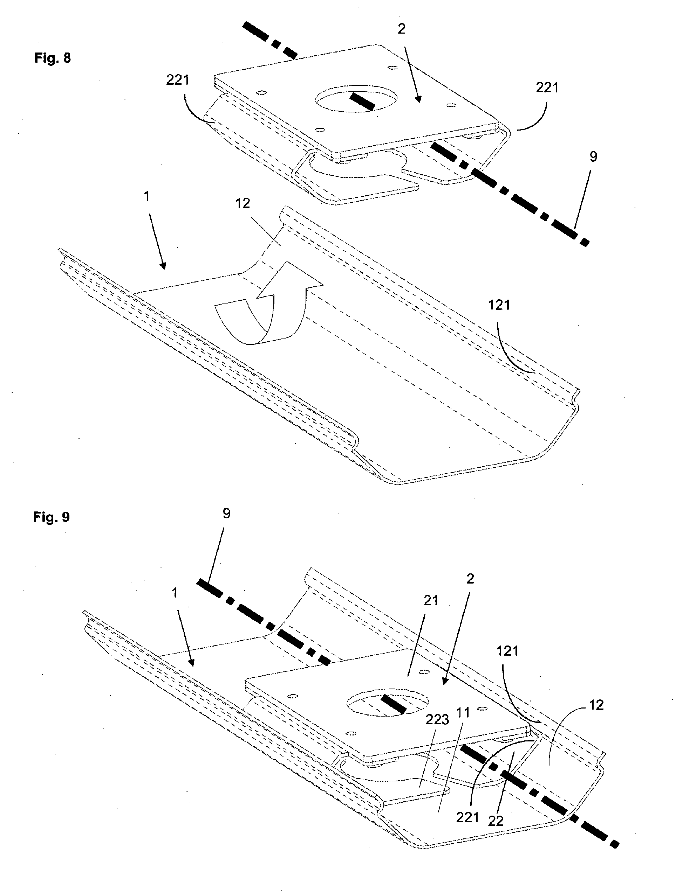

Figur 8 zeigt die Montagevorrichtung 2 von Figur 7 mit dem zusammengesetzten Halteteil 2, in das ein Kabel 9 eingeführt wurde. Nach der Montage des Halteteils 2 und dem Einlegen der Kabel 9 wird der Kabelkanal 1 angehoben und über das Halteteil 2 gestossen, so dass alle Kabel 9 in den Kabelkanal 1 eingebettet sind.

Figur 9 zeigt das fast vollständig in den Kabelkanal 1 eingesenkte Halteteil 2. Es ist ersichtlich dass die Wandelemente 22, 223 bzw. 11, 12 des Halteteils 2 und des Kabelkanals 1 praktisch formschlüssig aneinander anliegen und die Kopplungselemente 121, 221 miteinander gekoppelt sind.

Der Querschnitt des Kabelkanals 1 wird durch das darin eingesenkte Halteteil 2 daher nur soweit reduziert, wie dies durch die Dicke der Wandelemente 22, 223 des Halteteils 2 vorgegeben ist.

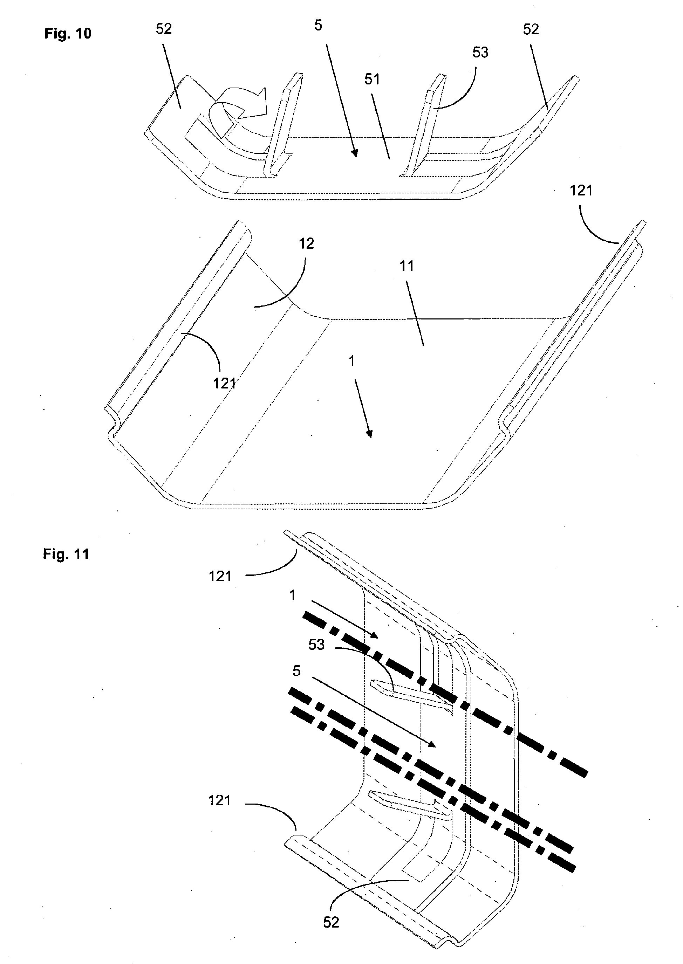

Figur 10 zeigt einen Kabelkanal 1 gemäss einer der Figuren 1 bis 9 mit einem dazu passenden Hilfselement 5, mittels dessen installiertes Kabel 9 geordnet und/oder gehalten werden kann, was beispielsweise erforderlich sein kann, wenn der Kabelkanal an einer Wand montiert wird.

Wie oben beschrieben wurde, weist der Kabelkanal 1 an den Enden der Seitenelemente 12 nach innen gewölbte Endleisten 121 auf, mittels derer der Kabelkanal 1 mit einem Halteteil 2 gekoppelt werden kann. Das Hilfselement 5 besteht aus einer leicht gebogenen Metallplatte, aus der zwei Segmente 53 partiell ausgeschnitten und nach oben gebogen sind, so dass Kabel 9 dazwischen gehalten werden kann.

Figur 11 zeigt das mit dem für die Wandmontage ausgerichteten Kabelkanal 1 verbundene Hilfselement 5 von Figur 10, das zwischen den Endleisten 121 festgeklemmt ist.

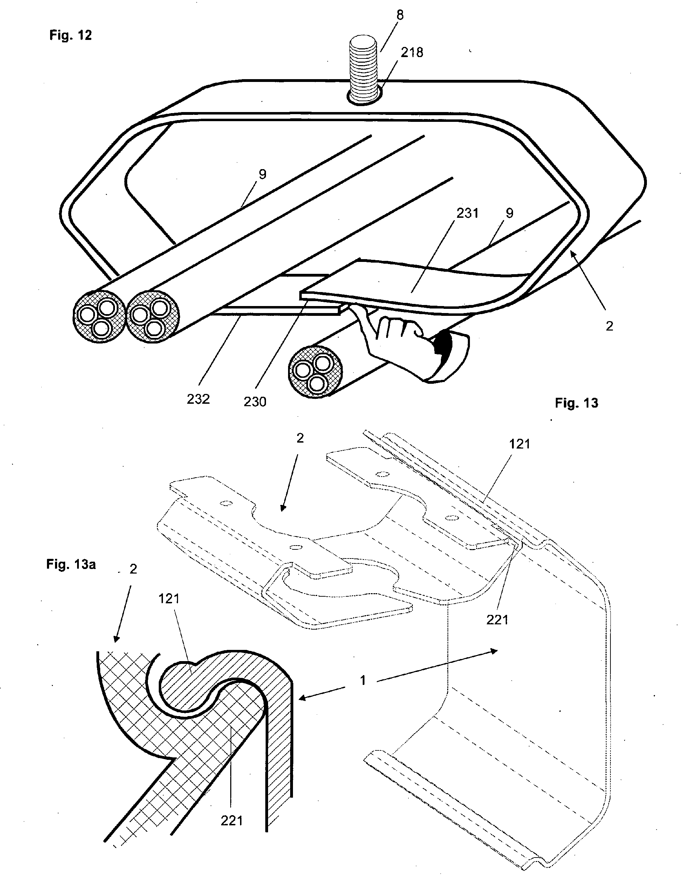

Figur 12 zeigt ein vorzugsweise ausgestaltetes Halteteil 2 mit einer selbstschliessenden Öffnung 230, die durch zwei einander überlappende Teile 231, 232 des unteren Wandelements 23 des Halteteils 2 gebildet wird. Zur Installation eines Kabels 9 wird das Teil 231 angehoben, wodurch die Öffnung 230 freigelegt wird und das Kabel 9 eingeführt werden kann. Anschliessend wird die Öffnung 230 automatisch wieder verschlossen. Selbstschliessende Öffnungen 230 dieser Art können auf verschiedene Weise, beispielsweise auch mittels einer Klinke realisiert werden.

Figur 13 zeigt ein vorzugsweise ausgestaltetes Halteteil 2, an dem ein dazu korrespondierender Kabelkanal 1 einseitig eingehängt ist, der nach der Installation der Kabel 9 hochgeklappt werden kann. Diese Ausgestaltung ist besonders vorteilhaft, wenn Kabel 9 ergänzt oder ersetzt werden sollen. In diesem Fall kann der Kabelkanal 1 einseitig gelöst und nach Abschluss der Arbeiten wieder hochgeklappt werden.

Figur 13a zeigt in einer Detaildarstellung vorzugsweise ausgestaltete Kopplungselemente 121, 221 für das Halteteil 2 und den Kabelkanal 1 von Figur 13. In der Darstellung ist der Kabelkanal 1 nur einseitig eingehängt.

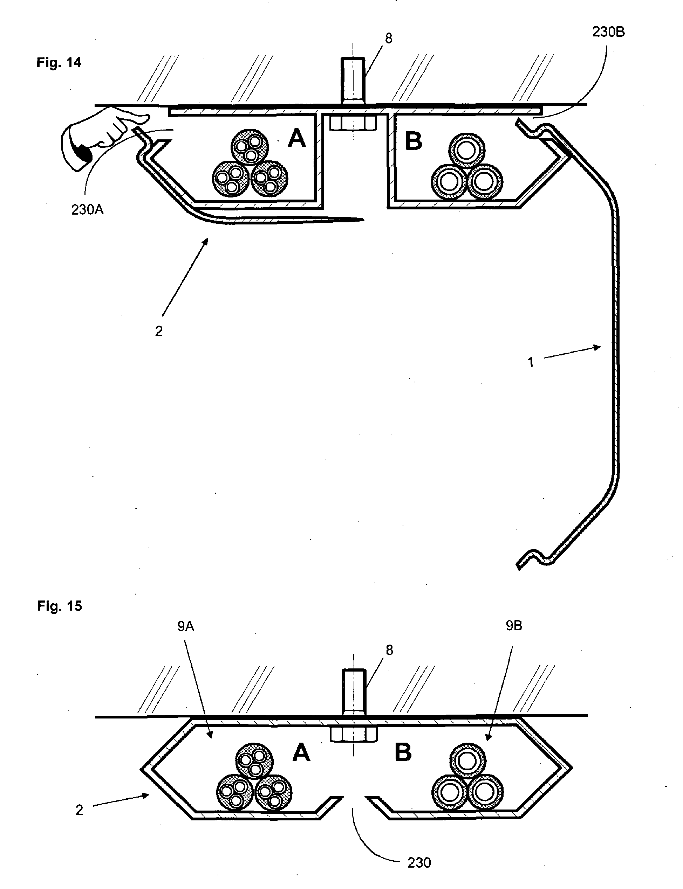

Figur 14 zeigt ein vorzugsweise ausgestaltetes Halteteil 2 mit zwei Kammern A, B, die je eine Zutrittsöffnung 230A bzw. 230B aufweisen, durch die auch nach der Installation des Kabelkanals 1 noch Kabel 9 eingelegt werden können. Die Kabel 9A, 9B können entsprechend ihrer Eigenschaften getrennt werden. In die Kammer A werden beispielsweise Kommunikationskabel eingelegt, während in die Kammer B Stromversorgungskabel eingelegt werden können. In der Figur 14 ist auf der linken Seite dargestellt, dass Kabel 9 auch noch nach der Montage des Kabelkanals 1 in diesen einlegbar ist.

Fig. 15 zeigt ein vorzugsweise ausgestaltetes Halteteil 2 mit zwei Kammern A, B, die je eine Zutrittsöffnung 230A bzw. 230B aufweisen, durch die Kabel 9A und 9B eingeführt und geordnet in die Kammern A, B abgelegt werden können.

Das in den Kabelkanal 1 einsenkbare Halteteil 2, das einen wesentlichen Anteil des Gewichts der installierten Kabel 9 trägt, kann gemäss den obigen Ausführungen somit verschiedenartig ausgestaltet und den Bedürfnissen der Anwender entsprechend angepasst werden.

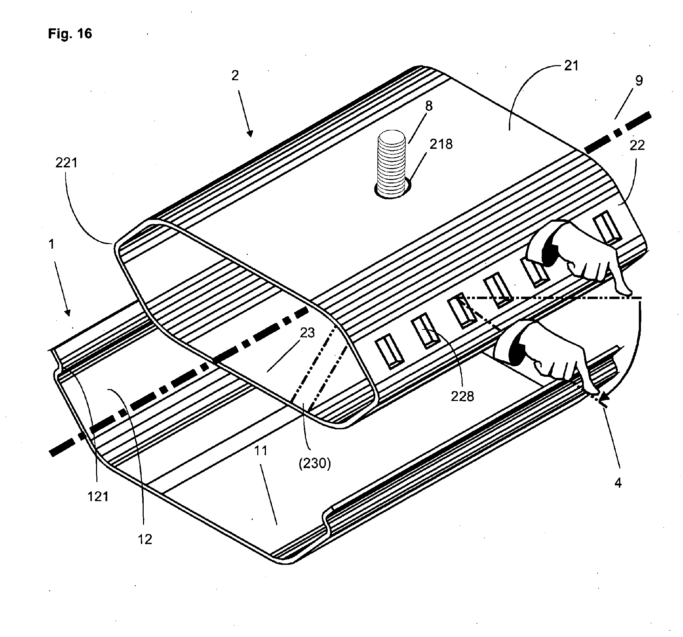

Figur 16 zeigt das Halteteil 2 von Figur 5, das an wenigstens einer Seitenwand 22 mit Öffnungen 228 versehen ist, in die ein dem Lösen des Kabelkanal 1 dienendes Werkzeug 4 einführbar ist. Da der Kabelkanal 1 auf das Halteteil 2 bzw. die Haltebügel 25 aufgedrückt wird, resultiert vorzugsweise ein Schnappverschluss, der nur mit entsprechend hoher Krafteinwirkung wieder lösbar ist. Insbesondere falls die Teile ineinander verhaken, genügt es vorzugsweise nicht, wenn der Kabelkanal 1 mit hoher Kraft, gegebenenfalls mittels des Eigengewichts der Kabel 9 nach unten gezogen wird. Trotzdem wäre es insbesondere bei Änderungen der Kabelinstallation, beispielsweise beim Verlegen zusätzlicher Kabel 9 wünschenswert, wenn die stabile Verbindung zwischen dem Halteteil 2 und dem Kabelkanal 1 mit wenig Aufwand und nur geringer Krafteinwirkung rasch gelöst werden könnte. Dazu werden Halteteil 2, vorzugsweise an den Oberseiten jeder Seitenwand 22 des Halteteils 2 vorzugsweise schlitzartige Öffnungen 228 vorgesehen, in die das stabförmige Werkzeug 4, beispielsweise ein Schraubenzieher einführbar ist. Indem der Schraubenzieher 4 in eine Öffnung 228 eingeführt und anschliessend manuell nach unten gezogen wird, kann der Kabelkanal 1 bzw. der Schnappverschluss elegant gelöst werden.

### Literaturverzeichnis:

[1] EP 1 505 705 A1
[2] EP 0 746 074 A1
[3] DE 24 31 834 A1
[4] EP 1 168 555 A1
[5] DE 101 01 085 A1
[6] GB 2 137 305 A
[7] GB 2 287 727 A
[8] GB 2 117 026 A

## Patentansprüche

1. Vorrichtung (2) zur Montage, insbesondere zur Deckenmontage eines der Installation von Kabeln (9) dienenden Kabelkanals (1), mit einem an einem Gebäudeteil (6) montierbaren ein- oder mehrteiligen Halteteil (2), das zum zumindest teilweisen Umschliessen von durch wenigstens eine Schlitzöffnung (230) einführbaren Kabeln (9) geeignet und in den Kabelkanal (1) derart einsenkbar ist, dass der Kabelkanal (1) die Schlitzöffnung (230) überdeckt und das Halteteil (2) zumindest teilweise umklammert, wodurch eine vorzugsweise lösbare Verbindung resultiert, **dadurch gekennzeichnet dass** die Achse (y) der Schlitzöffnung (230) gegenüber der Längsachse (x) des Kabelkanals (1) um den Winkel (a) derart geneigt ist, dass in das Halteteil (2) eingeführte und entlang der Achse (x) ausgerichtete Kabel (9) durch das Halteteil (2) fest gehalten sind.

2. Montagevorrichtung (2) nach Anspruch 1, **dadurch gekennzeichnet, dass** das zumindest annähernd ring- oder hülsenförmig ausgestaltete Halteteil (2) und der Kabelkanal (1) mittels eines oder mehrerer ersten und zweiten Kopplungselemente (121, 221) ein oder beidseitig miteinander verbunden sind und/oder dass Wandelemente (22) des Halteteils (2) und Wandelemente (12) des montierten Kabelkanals (1) ineinander verschoben sind und zumindest teilweise formschlüssig aneinander anliegen.

3. Montagevorrichtung (2) nach Anspruch 1 oder 2, **dadurch gekennzeichnet, dass** der Kabelkanal (1) zwei durch ein Bodenteil (11) miteinander verbundene Seitenwände (12) aufweist, an denen die zweiten Kopplungselemente (121) vorgesehen sind, die formschlüssig mit den an den Seitenwänden (22) des Halteteils (2) vorgesehenen ersten Kopplungselementen (221) gelenkig oder fest verbindbar sind.

4. Montagevorrichtung (2) nach Anspruch 3, **dadurch gekennzeichnet, dass** die ersten und/oder zweiten Kopplungselemente (121, 221) derart elastisch gehalten sind, dass das Halteteil (2; 21, 22) in den Kabelkanal (1) einschiebbar ist, wodurch ein Schnappverschluss gebildet wird.

5. Montagevorrichtung (2) nach einem der. Ansprüche 1-4, **dadurch gekennzeichnet, dass** das hülsenförmige Halteteil (2) einstückig ausgebildet oder aus zwei mittels einer Montageplatte (21) miteinander verbundenen vorzugsweise identisch ausgestalteten Haltebügeln (25) besteht, deren zur Bildung einer Schlitzöffnung (230) voneinander beabstandete Endstücke (223) frontseitig entlang der Achse (y) verlaufen, die mit der Längsachse (x) des Kabelkanals (1) einen Winkel a im Bereich von 45° einschliesst, wobei der Durchmesser der Schlitzöffnung (230) entsprechend dem Durchmesser der Kabel (9) gewählt ist.

6. Montagevorrichtung (2) nach Anspruch 5, **dadurch gekennzeichnet, dass** das Halteteil (2) eine Montageöffnung (218) zur Durchführung von Montageelementen (8) aufweist, zu der eine Erweiterung (2300) der Schlitzöffnung (230) korrespondiert, die es erlaubt, die Montageelemente (8) durch die Schlitzöffnung (230) in die Montageöffnung (218) einzuführen oder dass die Seitenwände (22) des Halteteils (2) wenigstens eine Öffnung (228) aufweisen, in die ein dem Lösen des Kabelkanals (1) dienendes Werkzeug (4) einführbar ist.

7. Montagevorrichtung (2) nach einem der Ansprüche 1-6, **dadurch gekennzeichnet, dass** das Halteteil (2), gegebenenfalls vorbehaltlich der Montageplatte (21) vollständig in den Kabelkanal (1) eingesenkt bzw. einsenkbar ist und/oder dass der Querschnitt des Kabelkanals (1) durch das darin eingesenkte Halteteil (2) nur soweit reduziert ist, wie dies durch die Dicke der Wandelemente (22, 223; 23) des Halteteils (2) vorgegeben ist.

8. Montagevorrichtung (2) nach einem der Ansprüche 1-7, **dadurch gekennzeichnet, dass** das Halteteil (2) aus Metall und der Kabelkanal (1) aus Metall oder einem gegebenenfalls flexiblen Kunststoff gefertigt ist und/oder dass der Kabelkanal (1) flexible Segmente oder Gelenke umfasst oder dass der Kabelkanal (1) an den Enden der Seitenelemente (12) nach innen gewölbte Endleisten (121) aufweist, mittels derer der Kabelkanal (1) mit dem Halteteil (2) gekoppelt ist.

9. Montagevorrichtung (2) nach einem der Ansprüche 1-8, **dadurch gekennzeichnet, dass** in den Kabelkanal (1) wenigstens ein mittels der Endleisten (121) gehaltenes, plattenförmiges Hilfselement (5) eingesetzt ist, aus dem eines oder mehrere Segmente (53) partiell ausgeschnitten und gegen den Innenraum des Kabelkanals (1) gebogen sind.

10. Montagevorrichtung (2) nach einem der Ansprüche 1-9, **dadurch gekennzeichnet, dass** das Halteteil (2) mehrere Kammern (A, B) aufweist, die je eine oder eine gemeinsame Öffnung (230A, 230B; 230) aufweisen.

11. Montagevorrichtung (2) nach einem der Ansprüche 1-10, **dadurch gekennzeichnet, dass** die dem Einlegen von Kabel (9) dienende Öffnung (230) vorzugsweise automatisch abschliessbar ist und gegebenenfalls durch sich überlappende Teile (231, 232) des Halteteils (2) gebildet ist.

12. Montagevorrichtung (2) nach einem der Ansprüche 1-11, **dadurch gekennzeichnet, dass** das Halteteil (2) über ein Verbindungselement (2100) oder direkt mit der Decke (6) verbunden ist.

13. Kabelkanal (1) installiert mit zwei oder mehreren Montagevorrichtungen (2) nach einem der Ansprüche 1-12.

## Claims

1. Device (2) for mounting, in particular for ceiling mounting of a cable routing device (1) serving the installation of cables (9), with a single-part or multipart holding element (2) to be mounted on a building part (6), appropriate for at least partial enclosure of cables (9) to be inserted through at least one slot-opening (230), and embeddable into the cable routing device (1) in a way that the cable routing device (1) covers the slot opening (230) and at least partially clutches the holding element (2), which results in a preferably detachable connection, **characterised in that** the axis (y) of the slot opening (230) is inclined by angle (a) in relation to the longitudinal axis (x) of the cable routing device (1) in a way that cables (9) inserted into the holding element (2) and oriented along the axis (x) will be firmly held by the holding element (2).

2. Mounting device (2) according to claim 1, **characterised in that** the at least approximately ring-shaped or sleeve-shaped-holding element (2) and the cable routing device (1) are unilaterally or bilaterally connected to each other by means of one or more first and second coupling elements (121, 221), and/or that wall elements (22) of the holding element (2) and wall elements (12) of the mounted cable routing device (1) are shoved into one another and are, at least partly, bordering each other in a form-locking manner.

3. Mounting device (2) according to claim 1 or 2, **characterised in that** the cable routing device (1) has two side walls (12) that are interconnected by a bottom part (11) at which side walls (12) the second coupling elements (121) are provided, which are connectable in a form-locking manner to the first coupling elements (221) provided at the side walls (22) of the holding element (2) either articulated or firmly.

4. Mounting device (2) according to claim 3, **characterised in that** the first and/or the second coupling elements (121, 221) are elastically held in such a manner that the holding element (2, 21, 22) can be shoved into the cable routing device (1), whereby a snap-lock is created.

5. Mounting device (2) according to one of the claims 1-4, **characterised in that** the sleeve-shaped holding element (2) is embodied as a single piece or consists of two preferably identical fastening bows (25) interconnected by means of a mounting plate (21), with the end pieces (223) of the fastening bows (25) positioned at a certain distance from each other to form a slot opening (230) that runs at their front sides along the axis (y) that forms an angle a in the range of 45° with the longitudinal axis (x) of the cable routing device (1) and wherein the diameter of the slot opening (230) is chosen according to the diameter of the cables (9).

6. Mounting device (2) according to claim 5, **characterised in that** for the transfer of mounting elements (8), the holding element (2) has a mounting opening (218) that corresponds with a widening (2300) of the slot opening (230), which allows to introduce the mounting elements (8) through the slot opening (230) into the mounting opening (218), or **in that** the side walls (22) of the holding element (2) have at least one opening (228) into which a tool (4) serving to detach the cable routing device (1) can be introduced.

7. Mounting device (2) according to one of the claims 1-6, **characterised in that** the holding element (2) is, possibly with reservation as to the mounting plate (21), completely embedded or embeddable into the cable routing device (1), and/or that the diameter of the cable routing device (1) is reduced by the embedded holding element (2) only to the extent determined by the thickness of the wall elements (22, 223, 23) of the holding element (2).

8. Mounting device (2) according to one of the claims 1-7, **characterised in that** the holding element (2) is produced of metal and the cable routing device (1) is produced of metal or possibly of a flexible plastic material, and/or that the cable routing device (1) comprises flexible segments or joints, or that the cable routing device (1) has inwardly curved end strips (121) at the ends of the side elements (12), which which the cable routing device (1) is coupled with the holding element (2).

9. Mounting device (2) according to one of the claims 1-8, **characterised in that** at least one plate-shaped auxiliary element (5), held by means of the end strips (121), is inserted into the cable routing device (1), with one or more segments (53) being partially cut out of it and bent towards the interior of the cable routing device (1).

10. Mounting device (2) according to one of the claims 1-9, **characterised in that** the holding element (2) has several chambers (A, B), which have one opening each or a common opening (230A, 230B, 230).

11. Mounting device (2) according to one of the claims 1-10, **characterised in that** the opening (230) serving to install cables (9) is preferably automatically lockable and is possibly formed by overlapping parts (231, 232) of the holding element (2).

12. Mounting device (2) according to one of the claims 1-11, **characterised in that** the holding element (2) is attached to the ceiling (6) via a connection element (2100) or directly.

13. Cable routing device (1) mounted with two or more mounting devices (2) as described in one of the claims 1-12.

## Revendications

1. Dispositif (2) pour le montage, en particulier pour un montage dans le plafond d'un canal de câble (1) servant à l'installation de câbles (9), comprenant une pièce de retenue (2) en une ou plusieurs partie et pouvant être montée sur une partie de bâtiment (6), partie de retenue qui est appropriée pour un entourage au moins partiel de câbles (9) insérables par au moins une fente d'ouverture (230) et qui peut être enrobée dans le canal de câble (1) de telle sorte que le canal de câble (1) recouvre la fente d'ouverture (230) et encercle par serrage au moins partiellement la pièce de retenue (2) ce qui permet d'obtenir une connexion pouvant être desserrée de préférence, **caractérisé en ce que** l'axe (y) de la fente (230) par rapport à l'axe longitudinal (x) du canal de câble (1) est inclinée de l'angle (a) de telle sorte que des câbles orientés le long de l'axe (x) et introduits dans la pièce de retenue (2) sont maintenus par la pièce de retenue (2).

2. Dispositif de montage (2) selon la revendication 1, **caractérisé en ce que** la pièce de retenue (2) configurée au moins approximativement en forme de bague ou de douille et le canal de câble (1) sont reliés entre eux d'un seul côté ou des deux côtés au moyen d'un ou de plusieurs premiers ou seconds éléments d'accouplement (121, 221) et/ou des éléments de paroi (22) de pièce de retenue (2) et des éléments de paroi (12) du câble de canal (1) monté sont insérés les uns dans les autres et s'appliquent au moins partiellement les uns contre les autres par adhérence des formes.

3. Dispositif de montage (2) selon la revendication 1 ou 2, **caractérisé en ce que** le canal de câble (1) présente deux parois latérales (12) reliées entre elles par une partie de fond (11), parois sur lesquelles il est prévu les seconds éléments d'accouplement (121), qui peuvent être reliés par adhérence des formes fixement ou de manière articulée aux premiers éléments d'accouplement (221) prévus sur les parois latérales (22) de la pièce de retenue (2).

4. Dispositif de montage (2) selon la revendication 3, **caractérisé en ce que** les premiers et/ou seconds éléments d'accouplement (121, 221) sont maintenus de manière élastique de sorte que la pièce de retenue (2 ; 21, 22) est insérable dans le canal de câble (1) formant ainsi une fermeture par encliquetage.

5. Dispositif de montage (2) selon l'une des revendications 1 à 4, **caractérisé en ce que** la pièce de retenue (2) en forme de douille est formée d'un seul tenant ou se compose de deux étriers de retenue (25) reliés entre eux au moyen d'une plaque de montage (21) et de préférence de forme identique, dont les extrémité (223) espacées l'une de l'autre pour la formation d'une fente d'ouverture (230) en face avant s'étendent le long de l'axe (y) qui forme avec l'axe longitudinal (x) du canal de câble (1) un angle a de 45°, le diamètre de la fente d'ouverture (230) étant choisi en fonction du diamètre des câbles (9).

6. Dispositif de montage (2) selon la revendication 5, **caractérisé en ce que** la pièce de retenue (2) présente une ouverture de montage (218) pour le passage d'éléments de montage (8) à laquelle correspond un élargissement (2300) de la fente d'ouverture (230), qui permet d'introduire les éléments de montage (8) dans l'ouverture de montage (218) à travers la fente d'ouverture (230) ou en ce que les parois latérales (22) de la pièce de retenue (2) présente au moins une ouverture (228), dans laquelle peut être inséré un outil (4) servant au desserrage du canal de câble (1).

7. Dispositif de montage (2) selon l'une des revendications 1 à 6, **caractérisé en ce que** la pièce de retenue (2) peut être encastrée ou est encastrable complétement dans le canal de câble (1), le cas échéant sous réserve d'une plaque de montage (21), et/ou la section transversale du canal de câble (1) n'est réduite par la pièce de retenue (2) enrobée que dans la mesure où cela est prédéterminé par l'épaisseur des éléments de paroi (22, 223; 23) de la pièce de retenue (2).

8. Dispositif de montage (2) selon l'une des revendications 1 à 7, **caractérisé en ce que** la pièce de retenue (2) se compose de métal et le canal de câble (1) est fabriqué en métal ou en matière plastique éventuellement flexible et/ou le canal de câble (1) comprend des segments flexibles ou des articulations ou **en ce que** le canal de câble (1) présente aux extrémités des éléments latéraux (12) des baguettes d'extrémité (121) bombées vers l'intérieur au moyeu de laquelle le canal de câble (1) est accouplé à la pièce de retenue (2).

9. Dispositif de montage (2) selon l'une des revendications 1 à 8, **caractérisé en ce que** dans le canal de câble (1), il est inséré au moins un élément auxiliaire (5) en forme de plaque, maintenu au moyen des baguettes d'extrémité (121), et à partir duquel est/sont découpé(s) partiellement un ou plusieurs segments (53) et sont courbés en direction de l'espace intérieur du canal de câble (1).

10. Dispositif de montage (2) selon l'une des revendications 1 à 9, **caractérisé en ce que** la pièce de retenue (2) présente plusieurs chambres (A, B) qui présentent respectivement une ou plusieurs ouvertures communes (230A, 230B ; 230).

11. Dispositif de montage (2) selon l'une des revendications 1 à 10, **caractérisé en ce que** l'ouverture (230) servant à l'insertion de câbles (9) peut être fermée de préférence automatiquement et est formée le cas échéant par des parties (231, 232) se chevauchant de la pièce de retenue (2).

12. Dispositif de montage (2) selon l'une des revendications 1 à 11, **caractérisé en ce que** la pièce de retenue (2) est reliée par un élément de connexion (2100) ou directement au plafond (6).

13. Canal de câbles (1) installé avec deux ou plusieurs dispositifs de montage (2) selon l'une des revendications 1 à 12.
